(19)

(11) **EP 2 899 829 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
***H02J 3/14*** *(2006.01)* ***H02J 3/24*** *(2006.01)*

(21) Anmeldenummer: **15150323.2**

(22) Anmeldetag: **07.01.2015**

(54) **REGELVORRICHTUNG FÜR EINE ELEKTRISCHE ANLAGE ZUM SICHEREN TRENNEN DER ELEKTRISCHEN ANLAGE VON EINEM ENERGIEVERSORGUNGSNETZ SOWIE ZUGEHÖRIGES VERFAHREN**

CONTROL DEVICE OF AN ELECTRICAL INSTALLATION TO SAFELY DISCONNECT THE ELECTRICAL EQUIPMENT FROM AN ENERGY SUPPLY NETWORK AND CORRESPONDING METHOD

DISPOSITIF DE RÉGLAGE POUR UNE INSTALLATION ÉLECTRIQUE POUR LA SÉPARATION SÛRE DE L'INSTALLATION ÉLECTRIQUE D'UN RÉSEAU D'ALIMENTATION EN ÉNERGIE ET PROCÉDÉ CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2014 DE 102014000916**

(43) Veröffentlichungstag der Anmeldung:
**29.07.2015 Patentblatt 2015/31**

(73) Patentinhaber: **innogy Netze Deutschland GmbH**
**45128 Essen (DE)**

(72) Erfinder:
- **Gaul, Dr.-Ing. Armin**
  **59379 Selm (DE)**
- **Daniel, Dr. Kai**
  **44879 Bochum (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**WO-A1-2013/152788**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Regelvorrichtung für eine in einem Energieversorgungsnetz angeordnete elektrische Anlage zum Regeln einer elektrischen Trennung einer elektrischen Verbindung zwischen der elektrischen Anlage und dem Energieversorgungsnetz gemäß Anspruch 1 sowie ein Verfahren zum Regeln der elektrischen Trennung einer elektrischen Verbindung zwischen einer in einem Energieversorgungsnetz angeordneten elektrischen Anlage und dem Energieversorgungsnetz gemäß Anspruch 9. Vorteilhafte Ausführungsformen sind in den abhängigen Ansprüchen definiert.

Aus der WO 2013/152788 A1 ist eine Regelvorrichtung für eine in einem Energieversorgungsnetz angeordnete elektrische Anlage zum Regeln einer elektrischen Trennung einer elektrischen Verbindung zwischen der elektrischen Anlage und dem Energieversorgungsnetz bekannt.

Ein grundsätzliches Anliegen von Betreibern eines Energieversorgungsnetzes ist es, einen Stromausfall in dem Energieversorgungsnetz zu vermeiden. Hierzu wird unter anderem im Stand der Technik vorgeschlagen, in einem Notfall Verbraucher abzuschalten, um einen großflächigen Totalausfall des Stromnetzes aufgrund einer Überlastung zu vermeiden. Darüber hinaus ist es beispielsweise aus der DE 10 2009 050 042 A1 bekannt, intelligente Ladesäulen für Elektrofahrzeuge im Notfall zur Stabilisierung des Stromnetzes zu nutzen. Die unmittelbare und insbesondere zeitgleiche Abschaltung von elektrischen Anlagen kann jedoch gerade dazu führen, dass ein Stromausfall in dem Energieversorgungsnetz auftritt, wie nachfolgend erläutert wird.
Die Zahl an dezentralen Erzeugungsanlagen und an intelligenten Verbraucher bzw. regelbaren Lasten im Energieversorgungsnetz nimmt stetig zu. Diese elektrischen Anlagen weisen bereits derzeit in Summe eine signifikante, also systemkritische Leistung auf. Gemäß der Union für die Koordinierung des Transports von Elektrizität (UCTE) liegt die Regelleistung für Europa bei 3 GW bei einer Gesamtregelleistung von 7GW. Problemtisch hieran ist insbesondere, dass Schalthandlungen, insbesondere die Trennung von elektrischen Anlagen von dem elektrischen Energieversorgungsnetz, oberhalb der Primärregelenergiereserve zu großflächigen Stromausfällen des Energieversorgungsnetzes führen können.

Bei gruppenweisen Abschaltvorgängen bzw. Unterbrechungsvorgängen, die dezentral und/oder zentral ausgelöst worden sind, besteht das Problem, dass signifikante sprunghafte (negative) Leistungssprünge im Energieversorgungsnetz durch die Abschaltung verursacht werden können. Diese können die Netzfrequenz und damit die Systemstabilität unzulässig beeinflussen. Insbesondere ist das Abfahren von graduellen/linearen Leistungsrampen in synchroner bzw. zeitgleicher Weise problematisch. Zudem können bei einer gruppenweisen Abschaltung von elektrischen Anlagen systemische Oszillationen verursacht werden. Für den Fall, dass identische oder ähnliche Anlagenarten eine Schaltbedingung deterministisch interpretieren und in dieser Folge Schalthandlungen ausführen, kann dies zu Oszillationen an der elektrischen Anlage selbst sowie im Energieversorgungsnetz führen, z.B. bei dezentral-autarken Schaltungsalgorithmen von dezentralen Erzeugungsanlagen, die sich nach folgendem Muster frequenzsensitiv verhalten:

a. Anlage bzw. Anlagengruppe A detektiert erfüllte Abschaltbedingung bzw. Trennbedingung "Unterfrequenz" und schaltet sich ab.
b. Durch Abschalten von Anlage bzw. Anlagengruppe A steigt die Frequenz und löst bei Anlage bzw. Anlagengruppe B die Einschaltbedingung "Überfrequenz" aus.
c. Die Anlage bzw. Anlagengruppe B schaltet sich zu und bewirkt durch Zuschalten einen Frequenzrückgang, der wiederum Anlage A einschalten lässt, usw.

Dies führt zu einer Endlosschleife in einem deterministischen Hysteresebereich. Hohe Frequenzfluktuationen stellen möglicherweise wiederum große Probleme für die Messeinrichtungen in Wechselrichtern von dezentralen Erzeugern dar (so genanntes df/dt Problem).

Beispielsweise können Abschaltvorgänge bzw. Unterbrechungsvorgänge durchgeführt von einem Netzführer/Netzbetreiber im Rahmen des Einspeise- und Lastmanagements und/oder von Lieferanten im Rahmen von Vertriebsaktivitäten (z.B. Energiehandel) ausgelöst werden.

Kleinsteinspeiser und kleine Lasten bzw. Verbraucher haben isoliert betrachtet keinen signifikanten Einfluss auf die Netzstabilität und -zuverlässigkeit. Wie bereits beschrieben wurde, ist jedoch im Rahmen der Energiewende und/oder des Smart Meter Rollouts zu erwarten, dass die Anzahl steuerbarer Netzelemente stetig und rasant steigen wird. Durch die hohe Anzahl von verteilten Erzeugern und Lasten ist eine zentrale Steuerung des Prozesses (nahezu) unmöglich, so dass zukünftig eine Aggregation bzw. Gruppierung von Kleinsteinspeisern und Lasten vorgenommen werden muss. In Summe stellen solche Last- bzw. Einspeisergruppen u.U. sehr kritische Leistungsmengen dar, die in Einklang mit der Netzstabilität einer dezentralen Regelung bedürfen.

Es ist daher die Aufgabe der vorliegenden Erfindung, eine Regelvorrichtung für eine elektrische Anlage zur Verfügung zu stellen, welche eine Trennung der elektrischen Verbindung zwischen der elektrischen Anlage und einem Energieversorgungsnetz in sicherer und stabilerer Weise ermöglicht und insbesondere das Risiko eines Stromausfalls reduziert.

Diese Aufgabe wird gemäß einem ersten Aspekt der Erfindung bei einer Regelvorrichtung für eine in einem Energieversorgungsnetz angeordnete elektrische Anlage zum Regeln (bzw. Steuern) einer elektrischen Trennung einer elektrischen Verbindung zwischen der elektrischen Anlage und dem Energieversorgungsnetz gemäß dem Patentanspruch 1 gelöst. Die Regelvorrichtung umfasst mindestens eine Detektionseinrichtung eingerichtet zum Detektieren von mindestens einer ersten Trennbedingung. Die Regelvorrichtung umfasst mindestens eine Regeleinrichtung eingerichtet zum Bestimmen einer ersten Trennverzögerungszeitspanne nach Detektion der ersten Trennbedingung. Die erste Trennverzögerungszeitspanne ist eine zufällige Zeitspanne ist. Die Regeleinrichtung ist eingerichtet, eine elektrische Trennung der elektrischen Verbindung zwischen der elektrischen Anlage und dem Energieversorgungsnetz frühestens nach Ablauf der ersten Trennverzögerungszeitspanne zu bewirken.

Indem im Gegensatz zum Stand der Technik eine Regelvorrichtung, insbesondere eine agentenbasierte-Regelvorrichtung, für eine (dezentrale) elektrische Anlage bereitgestellt wird, wobei die Regeleinrichtung ein Deaktivieren der elektrischen Anlage erst nach Ablauf einer zufälligen Trennverzögerungszeitspanne erlaubt, wird ein gleichzeitiges und unmittelbares Abschalten sämtlicher elektrischer Anlagen in dem Energieversorgungsnetz verhindert. Insbesondere kann hierdurch sichergestellt werden, (gruppenweise) Abschaltvorgänge bzw. Unterbrechungsgänge derart durchzuführen, dass sich die Schwankungen von eingespeister und verbrauchter Leistung innerhalb zulässiger Parameterbereiche halten.

Die Regelvorrichtung (bzw. Steuervorrichtung), beispielsweise ein Hardware- und/oder Softwaremodul, kann in einer elektrischen Anlage integriert sein und/oder an dieser angeschlossen sein. Beispielsweise kann die Regelvorrichtung als Steuerbox zwischen einem Smart Meter Gateway und einer Erzeugungsanlage realisiert sein. Die elektrische Anlage, wie ein Verbraucher oder ein Energieerzeuger, ist an ein Energieversorgungsnetz angeschlossen. Beispielsweise bei einem (zu erwartenden) Stromausfall in dem Energieversorgungsnetz, insbesondere in einem weiteren Bereich des Gesamtenergieversorgungsnetzes, kann die elektrische Anlage deaktiviert werden. Ein Energieversorgungsnetz umfasst vorliegend mindestens ein Ortsnetz, Mittelspanungsnetz und/oder Hochspannungsnetz. Das Energieversorgungsnetz kann insbesondere die Einspeiser und Lasten, die sich nicht in der Hand des Netzbetreibers befinden, umfassen.

Die Regelvorrichtung umfasst eine Detektionseinrichtung zum Detektieren von mindestens einer ersten Trennbedingung. Unter der Detektion einer Trennbedingung ist zu verstehen, dass die Trennbedingung erfüllt ist. In einem einfachen Fall kann die Detektionseinrichtung ein Abschaltsignal empfangen. Beispielsweise kann die Detektionseinrichtung in Form einer Schnittstelle gebildet sein. Die mindestens eine erste Trennbedingung definiert, wann eine Deaktivierung der elektrischen Anlage erfolgen soll. Beispielsweise kann eine erste Trennbedingung sein, dass mindestens ein Netzparameter, wie eine Netzspannung, ein Netzstrom oder eine Netzfrequenz, (lokal) auf dem Energieversorgungsnetz, also einer Energieversorgungsleitung, nicht mit einer Sollvorgabe übereinstimmt. Es versteht sich, dass eine Mehrzahl von ersten Trennbedingungen vorgegeben werden können. Ferner versteht es sich, dass die Erfüllung einer ersten Trennbedingung oder eine Erfüllung von zwei oder mehr ersten Trennbedingungen für ein positives Detektionsergebnis vorliegen muss/müssen.

Wenn die Detektionsvorrichtung die mindestens eine erste Trennbedingung detektiert, also ein Deaktivieren bzw. Abschalten der elektrischen Anlage grundsätzlich erfolgen soll, dann bestimmt die Regeleinrichtung (vor der Deaktivierung) eine zufällige erste Trennverzögerungszeitspanne. Die Trennverzögerungszeitspanne ist insbesondere ein Zeitraum, um den die Deaktivierung der elektrischen Anlage (mindestens) verzögert wird. Mit anderen Worten bleibt eine Deaktivierung bzw. elektrische Trennung der elektrischen Anlage von dem Energieversorgungsnetz vor dem Ablauf der ersten Trennverzögerungszeitspanne gesperrt. Die Regeleinrichtung (bzw. Steuereinrichtung) kann beispielsweise einen geeigneten Zufallsgenerator zum Bestimmen der ersten Trennverzögerungszeitspanne aufweisen.

Frühestens nach Ablauf der ersten Trennverzögerungszeitspanne kann die Regeleinrichtung ein Unterbrechen der elektrischen Verbindung zwischen der elektrischen Anlage und dem Energieversorgungsnetz bewirken und beispielsweise ein Deaktivierungssignal generieren und senden. Es kann eine direkte Schaltung bzw. Deaktivierung der elektrischen Anlage bewirkt werden. So kann die Umsetzung über ein Relais oder einen (direkten) Steuerimpuls, also insbesondere durch eine direkte Schaltung, erfolgen. Das Deaktivierungssignal kann dazu eingerichtet sein, ein Deaktivieren bzw. Abschalten der elektrischen Anlage freizugeben. Insbesondere kann eine Schalteinrichtung der elektrischen Anlage angesteuert werden. Ein Schalter der Schalteinrichtung kann (nur) nach Erhalt des Deaktivierungssignals geöffnet werden, so dass eine elektrische Kopplung zwischen der elektrischen Anlage und dem Energieversorgungsnetz getrennt werden kann. Dann kann die elektrische Anlage in herkömmlicher Weise, jedoch zeitversetzt, runtergefahren werden.

Durch die erfindungsgemäße Regelvorrichtung wird verhindert, dass sich eine Vielzahl von elektrischen Anlagen (nahezu) gleichzeitig nach Detektion einer Abschaltbedingung abschalten. Jede elektrische Anlage umfassend die Regelvorrichtung schaltet (frühestens) nach dem Ablauf einer zufälligen Zeitspanne ab bzw. trennt die elektrische Anlage von dem Energieversorgungsnetz. Hierdurch kann verhindert werden, dass die vertikale Netzlast den systemkritischen, also zulässigen, Leistungsgradienten der Regelzone(n), wie dem Energieversorgungsnetz, übersteigt. Die Flankensteilheit kann verringert werden. Ein langsames und stabiles Runterfahren des Subnetzes bzw. des Energieversorgungsnetzes kann in einfacher Weise erreicht werden.

Generell kann durch die vorliegende Erfindung für alle Zeitpunkte die Summe der eingespeisten und verbrauchten Leistung Null ergeben. So kann die Erfindung dazu beitragen, dass die Systemfrequenz *f* stabilisiert wird. Die zur Verfügung stehenden Regelenergiereserven werden nicht überschritten, so dass die vertikale Netzlast (positive & negative Lasten/Erzeuger der Verteilnetze) nur sukzessiv und nur so schnell wieder unterbrochen werden, wie die Netzfrequenz es zulässt. Dem Gesamtsystem wird durch die Erfindung also Zeit zwischen einzelnen Zu-/Abschaltungen gegeben, die es den anderen Systembeteiligten (z.B. Regelzonenbetreiber) möglich macht, auf die Statusänderungen zu reagieren.

Bei gruppenweisen Abschaltvorgängen bzw. Unterbrechungsvorgängen kann durch dezentrale integrierte und autarke Algorithmen beispielsweise auf Basis autonomer Agenten dafür Sorge getragen werden, dass (nahezu) kein/e

- sprunghafter Lastabwurf
- sprunghafte Unterbrechung von Einspeisern

  durch eine synchrone Unterbrechung dezentral-verteilter elektrischer Anlagen (Lasten/Einspeiser) hervorgerufen wird. Eine notwendige Asynchronität kann dezentral umgesetzt werden.

Grundsätzlich kann eine Abschaltung einer elektrischen Anlage zentral, beispielsweise durch ein entsprechendes Steuersignal, welches von der Detektionseinrichtung, beispielsweise eine Schnittstelle eingerichtet zum Empfangen des Steuersignals, empfangen und/oder ausgewertet werden kann, und/oder dezentral ausgelöst werden. Auch eine dezentrale Auslösung kann durch ein Steuersignal und/oder aufgrund eines erfassten vorgebbaren Zustands des Energieversorgungsnetzes ausgelöst werden. Beispielsweise können Abschaltvorgänge bzw. Unterbrechungsvorgänge durchgeführt von einem Netzführer/Netzbetreiber im Rahmen des Einspeise- und Lastmanagements und/oder von Lieferanten im Rahmen von Vertriebsaktivitäten (z.B. Energiehandel) ausgelöst werden.

Gemäß einer ersten Ausführungsform der Regelvorrichtung der vorliegenden Erfindung kann mindestens eine Erfassungseinrichtung eingerichtet zum Erfassen von mindestens einem elektrischen Netzparameter vorgesehen sein. Mit anderen Worten kann eine Erfassungseinrichtung, wie ein intelligentes Messsystem, in der Regelvorrichtung integriert oder mit der Regelvorrichtung verbindbar sein. Beispielsweise kann die Erfassungseinrichtung bereits in der elektrischen Anlage vorhanden sein. Insbesondere kann die Erfassungseinrichtung mit der Detektionseinrichtung, z.B. einem Smart Meter Gateway, gekoppelt sein. In diesem Fall kann die Erfassungseinrichtung in Form einer Schnittstelle gebildet sein. Beispielsweise kann die Erfassungseinrichtung eingerichtet sein, die Netzfrequenz und/oder die Netzspannung und/oder den Netzstrom des Energieversorgungsnetzes zu erfassen. Insbesondere kann die/der lokale und aktuelle Netzfrequenz und/oder Netzspannung und/oder Netzstrom gemessen werden. Es versteht sich, dass der Regelvorrichtung verfügbare Messwerte bereitgestellt werden können. Diese können dann verarbeitet werden.

Die Detektionseinrichtung kann zum Vergleichen des erfassten Netzparameters mit einem ersten zulässigen Netzparameterbereich eingerichtet sein. Die Detektionseinrichtung kann zum Detektieren einer ersten Trennbedingung bei einem positiven Vergleichsergebnis eingerichtet sein. Mindestens einer der erfassten Netzparameter kann von der Detektionseinrichtung mit einem zulässigen ersten Netzparameterbereich, der durch einen minimalen und maximalen Grenzwert definiert ist, verglichen werden. Der zulässige erste Netzparameterbereich gibt insbesondere an, wann grundsätzlich ein Abschalten der elektrischen Anlage zulässig ist.

Vorzugsweise kann zumindest die Netzfrequenz erfasst werden. Liegt die Netzfrequenz außerhalb eines zulässigen Netzfrequenzbereichs (z.B. 0 bis 49,8 Hz oder über 50,2 Hz), dann ist das Vergleichsergebnis negativ. Die erste Trennbedingung liegt nicht vor. Liegt die erfasste Netzfrequenz hingegen innerhalb des zulässigen Netzfrequenzbereichs, dann ist das Vergleichsergebnis positiv und die erste Trennbedingung ist erfüllt. Beispielsweise liegt eine Unter- oder Überfrequenz vor. Es versteht sich, dass in entsprechender Weise alternativ oder zusätzlich die Netzspannung und/oder der Netzstrom ausgewertet werden kann.

Ferner wird gemäß einer Ausführungsform vorgeschlagen, dass die erste Trennverzögerungszeitspanne eine zufällige Zeitspanne zwischen einem minimalen Zeitgrenzwert und einem maximalen Zeitgrenzwert ist. Insbesondere können sinnvolle Grenzen vorgegeben werden, um ein zu frühes aber auch ein (viel) zu spätes Deaktivieren der elektrischen Anlage zu vermeiden. Der minimale Zeitgrenzwert kann im Bereich von wenigen Sekunden bis mehreren Stunden liegen. In entsprechender Weise kann der maximale Zeitgrenzwert im Bereich von wenigen Sekunden bis mehreren Stunden liegen. Der Zeitgrenzwert kann ebenfalls in Abhängigkeit einer schaltberechtigten Marktrolle variieren, so dass beispielsweise ein Netzführer ohne Trennverzögerungszeitspanne schalten kann und zeitgleich für andere Marktrollen wie Stromlieferanten oder Direktvermarkter eine Trennverzögerungszeitspanne ungleich Null vorgegeben ist.

Grundsätzlich können die Zeitgrenzwerte für sämtliche elektrische Anlagen stets im Wesentlichen gleich sein und beispielsweise bei der Erstinstallation vorgegeben werden. Vorzugsweise werden der maximale Zeitgrenzwert und der minimale Zeitgrenzwert individuell für jede elektrische Anlage zum Zeitpunkt der Detektion der ersten Trennbedingung von der Regelvorrichtung bestimmt. Gemäß einer bevorzugten Ausführungsform der erfindungsgemäßen Regelvorrichtung kann die Regeleinrichtung zum Bestimmen des maximalen Zeitgrenzwerts und des minimalen Zeitgrenzwerts in Abhängigkeit von mindestens einem Parameter ausgewählt aus der Gruppe umfassend

- Systemklasse der elektrischen Anlage,
- regelbare Netzlast oder nicht regelbare Netzlast der der elektrischen Anlage,
- Art der Netzlast der elektrischen Anlage,
- Höhe der Nennleistung der Netzlast der elektrischen Anlage,
- historische Daten der elektrischen Anlage,
- mindestens ein (lokal) erfasster Netzparameter,
- lokale Uhrzeit der elektrischen Anlage,
- Dauer eines möglichen Stromausfalls,
- empfangener Steuerbefehl,
- schaltberechtigte Marktrolle

eingerichtet sein. Indem die Eigenschaften der elektrischen Anlage und/oder Umgebungsparameter bei der Bestimmung der ersten Trennverzögerungszeitspanne berücksichtigt werden, kann ein in noch sicherer Weise erreicht werden, dass ein Runteranfahren der elektrischen Anlage nicht zu einem Stromausfall des Energieversorgungsnetzes führt. Beispielsweise kann mindestens einer der Parameter in einer Bestimmungsregel abgebildet werden, die in der Regelvorrichtung implementiert sein kann. Die Regel kann beispielsweise direkt zur Bestimmung der zufälligen Trennverzögerungszeitspanne genutzt werden. Vorzugsweise kann die Trennverzögerungszeitspanne in Abhängigkeit von mindestens einem der oben genannten Parameter mittels eines Zustandsautomaten, eines Petri-Netzes, einer erweiterten ereignisgesteuerten Prozesskette (eEPK), eines durch einen Algorithmus umgesetztes Flussdiagramm und/oder dergleichen bestimmt/berechnet werden.

Vorliegend können die elektrischen Anlagen grundsätzlich in zwei verschiedene Systemklassen, nämlich Energieerzeuger und Verbraucher, unterteilt werden. In einem einfachen Fall kann vorgesehen sein, dass eine Systemklasse zumindest im Durchschnitt vor der anderen Systemklasse deaktiviert werden soll. Entsprechend können die Zeitgrenzwerte für die verschiedenen Systemklassen gesetzt bzw. bestimmt werden.

Ferner ist erkannt worden, dass ein wesentliches Kriterium für ein frühzeitiges oder spätes Runterfahren einer elektrischen Anlage ist, ob es sich um eine regelbare oder nicht regelbare Netzlast handelt. Darunter ist zu verstehen, ob, beispielsweise mittels der Regelvorrichtung, die dem Energieversorgungsnetz zugeschaltete Netzlast regelbar ist. Ist eine Netzlast beispielsweise nur pauschal abschaltbar, dann kann der minimale Zeitgrenzwert groß sein, während eine regelbare Netzlast frühzeitig zumindest teilweise abgeschaltet werden kann, da sie zum Stabilisieren des Energieversorgungsnetzes (aktiv) genutzt werden kann. Entsprechend kann eine Regel implementiert sein, dass eine regelbare Netzlast zumindest im Durchschnitt vor einer nicht regelbaren Netzlast deaktiviert werden sollte.

Nicht abschließende Beispiele verschiedener Arten der Netzlast sind

- Winderzeugungsanlagen,
- Photovoltaikanlagen,
- Blockheizkraftwerke,
- Wärmepumpen,
- ohmsche Verbraucher,
- induktive/kapazitive Lasten.

Auch hier kann es sich als vorteilhaft erweisen, bestimmte Arten der Netzlast vor anderen Arten der Netzlast abzuschalten und entsprechende Regeln zu implementieren. Beispielsweise kann bestimmt werden, ob aktuell ein Bedarf an Blindleistung besteht oder nicht. Insbesondere kann der Phasenwinkel zwischen Netzspannung und Netzstrom ausgewertet werden. Dementsprechend können bestimmte Lasten vor anderen Lasten abgeschaltet werden.

Auch die Höhe der Nennleistung der Netzlast der elektrischen Anlage kann als Parameter berücksichtigt werden. Beispielhaft kann eine Regel implementiert werden, wonach elektrische Anlagen mit einer Netzlast in einem ersten Bereich vorteilhafter Weise im Durchschnitt vor elektrischen Anlagen mit einer Netzlast in einem zweiten Bereich, beispielsweise einem niedrigeren Bereich, deaktiviert werden sollten.

Ferner ist erkannt worden, dass die Höhe der Netzlast von der Art der Netzlast und zusätzlich von der lokalen Uhrzeit abhängen kann. So kann beispielsweise bei Photovoltaikanlagen um die Mittagszeit eine hohe Netzlast vorliegen, dessen Abschaltung während der Mittagszeit kritisch hinsichtlich der Netzstabilität sein kann. In der Nacht könnte sich die Abschaltung einer Photovoltaikanlage hingegen als weniger kritisch erweisen. Entsprechend kann eine Regel für Photovoltaikanlagen implementiert werden, wonach die Zeitgrenzwerte derart bestimmt bzw. gesetzt werden, dass eine Deaktivierung vorzugsweise nicht während der Mittagszeit erfolgt.

Weitere Kriterien, die die Bestimmung der Zeitgrenzwerte beeinflussen können, sind historische Daten. Wenn aus den historischen Daten beispielsweise hervorgeht, dass in den letzten Tagen vor dem bevorstehenden Stromausfall die elektrische Anlage nur eine geringe Netzlast erzeugt/verbraucht hat, kann gefolgert werden, dass dies auch zum Zeitpunkt des Stromausfalls der Fall ist. Entsprechende Regeln können implementiert werden. Zusätzlich können beispielsweise Wetterprognosen bei der Bestimmung berücksichtigt werden. Auch kann mindestens ein lokal erfasster Netzparameter berücksichtigt werden.

Auch können Prognosen über die Dauer des zu erwartenden Stromausfalls berücksichtigt werden. Schließlich kann vorgesehen sein, dass (externe) Steuerbefehle (Overrule-Funktion, Kurzschluss-unterbrechung, Mitnahmeschaltung, etc.) von der Regelvorrichtung empfangen werden und zu berücksichtigen sind.

Vorzugsweise können die vorgenannten Parameter priorisiert werden, wobei die Priorisierung von den tatsächlichen Werten der einzelnen Parameter abhängen kann. Die Priorisierung kann beispielsweise durch einen Steuerbefehl und/oder werkseitig vorgegeben sein.

Wie zuvor beschrieben wurde, kann in der Regelvorrichtung, beispielsweise in einer Speichereinrichtung der Regelvorrichtung, mindestens eine Bestimmungsregel in Form eines Algorithmus implementiert sein. Durch eine Abarbeitung dieser mindestens einen Regel kann dann der minimale und der maximale Zeitgrenzwert für jede einzelne elektrische Anlage festgelegt werden. Dann kann eine zufällige Trennverzögerungszeitspanne zwischen den Zeitgrenzwert bestimmt werden Es versteht sich, dass die beiden Teilschritte auch in einer Bestimmungsregel oder in einer Mehrzahl an Bestimmungsregeln umgesetzt werden kann.

Des Weiteren kann gemäß einer Ausführungsform vorgesehen sein, dass die Regeleinrichtung nach Ablauf der ersten Trennverzögerungszeitspanne (stets) automatisch eine Trennung einer elektrischen Verbindung zwischen der elektrischen Anlage und dem Energieversorgungsnetz bewirkt, beispielsweise das Deaktivierungssignal sendet. Wie bereits beschrieben wurde, kann ein Deaktivierungssignals und/oder ein direktes Schalten beispielsweise durch einen direkten Schaltimpuls erfolgen. Mit anderen Worten kann vorgesehen sein, dass sich die elektrische Anlage (stets) automatisch nach Ablauf der ersten Trennverzögerungszeitspanne abschaltet. Gemäß einer bevorzugten Ausführungsform wird vorgeschlagen, dass die Detektionseinrichtung zum Detektieren von mindestens einer zweiten Trennbedingung nach Ablauf der ersten Trennverzögerungszeitspanne eingerichtet sein kann. Die Regeleinrichtung kann zum Bewirken des Trennens einer elektrischen Verbindung frühestens nach Ablauf der weiteren Trennverzögerungszeitspanne eingerichtet sein. Vorzugsweise kann vor jedem Bewirken der Trennung der elektrischen Verbindung, wie dem Aussenden des Deaktivierungssignals, bzw. nach jedem Ablauf einer Trennverzögerungszeitspanne diese Auswertung durchgeführt werden. Die Regeleinrichtung kann zum Senden des Deaktivierungssignals nur, also ausschließlich, bei einem positiven Detektionsergebnis eingerichtet sein. Die zweite Trennbedingung kann grundsätzlich mit der ersten Trennbedingung übereinstimmen. Indem vor einer tatsächlichen Freigabe einer Deaktivierung der elektrischen Anlage nach Ablauf der ersten Trennverzögerungszeitspanne eine erneute Prüfung durchgeführt wird, kann ein noch stabileres und damit sicheres Runterfahren erreicht werden.

Vorzugsweise kann die zweite Trennbedingung eine Bedingung sein, bei deren Erfüllung sich die Abschaltung bzw. Deaktivierung der elektrischen Anlage als positiv, insbesondere netzstabilisierend, auswirkt. Beispielsweise kann die zweite Trennbedingung individuell für jede elektrische Anlage, beispielsweise in Abhängigkeit der oben genannten Parameter, wie die Systemklasse der elektrischen Anlage, die Art der Netzlast, die Höhe der Nennleistung der Netzlast der elektrischen Anlage und dergleichen, festgelegt werden. Wenn es sich beispielsweise bei der elektrischen Anlage um einen Energieerzeuger handelt, dann kann die zweite Trennbedingung derart definiert sein, dass sie nur dann erfüllt ist, wenn sich die Reduzierung von einzuspeisender Leistung in das Netz aktuell netzstabilisierend wirkt. Entsprechendes kann für einen Verbraucher festgelegt werden.

Auf diese Weise können Wechselrichter von Erzeugungsanlagen wie auch intelligente Verbraucher dazu verwendet werden, die Netzfrequenz zu stabilisieren, indem lokal verfügbare Informationen von der Regelvorrichtung, wie einem Software-Agenten, gemessen werden und abhängig von Kontext ihre eigene Trennverzögerungszeitspanne für das Abschalten bestimmen.

Bei einem negativen Detektionsergebnis kann unterschiedlich verfahren werden. Beispielsweise kann die elektrische Anlage aktiviert bleiben, bis sie manuell deaktiviert wird. Gemäß einer bevorzugten Ausführungsform kann die Regeleinrichtung zum Bestimmen von mindestens einer weiteren Trennverzögerungszeitspanne bei einem negativen Detektionsergebnis eingerichtet sein. Die Regeleinrichtung kann zum Bewirken der Trennung einer elektrischen Verbindung frühestens nach Ablauf der weiteren Trennverzögerungszeitspanne eingerichtet sein. Die Bestimmung der weiteren Trennverzögerungszeitspanne kann in ähnlicher Weise wie die Bestimmung der ersten Trennverzögerungszeitspanne erfolgen.

Vorzugsweise kann die Überprüfung der mindestens einen zweiten Trennbedingung nach jedem Ablauf einer Trennverzögerungszeitspanne durchgeführt werden. Ist das Detektionsergebnis positiv, so kann eine elektrische Verbindung Trennung bewirkt werden, beispielsweise ein Deaktivierungssignal ausgesendet werden. Ist das Detektionsergebnis negativ, kann vorzugsweise (immer) eine weitere Trennverzögerungszeitspanne bestimmt werden. Es ist erkannt worden, dass die zu bestimmende Trennverzögerungszeitspanne vorteilhafterweise länger sein sollte als die unmittelbar abgelaufene Trennverzögerungszeitspanne. Insbesondere ist es vorteilhaft, die Trennverzögerungszeiten jeweils exponentiell zu erhöhen. Beispielsweise kann zur Bestimmung der Trennverzögerungszeitspanne T nachfolgende Gleichung genutzt und in der Regeleinrichtung implementiert sein:

$$T = \alpha + \beta \exp\{\gamma * \chi + \kappa\} \qquad (a)$$

wobei $\alpha, \beta, \gamma, \chi, \kappa$ dabei Funktionen der oben genannten Parameter sind, die zum Bestimmen des maximalen Zeitgrenzwerts und des minimalen Zeitgrenzwerts berücksichtigt werden können. Auf diese Weise kann sichergestellt werden, dass bestimmte An-/Abfahrrampen nicht überschritten werden können, auch wenn keine zentrale Steuerung vorhanden ist.

Bei der Bestimmung der weiteren Trennverzögerungszeiten können die oben genannten Parameter in ähnlicher Weise Berücksichtigung finden.

Die Überprüfung, ob die zweite Trennbedingung erfüllt ist, kann in beliebiger Weise erfolgen. Gemäß einer bevorzugten Ausführungsform der erfindungsgemäßen Regelvorrichtung kann die Detektionseinrichtung zum Vergleichen von mindestens einem Netzparameter mit einem zweiten zulässigen Netzparameterbereich zumindest nach Ablauf der ersten Trennverzögerungszeitspanne eingerichtet sein. Die Detektionseinrichtung kann zum Detektieren der zweiten Trennbedingung bei einem positiven Vergleichsergebnis eingerichtet sein. Insbesondere kann von der Detektionseinrichtung mindestens ein aktueller und/oder lokaler Netzparameter, wie die Netzfrequenz und/oder die Netzspannung und/oder der Netzstrom und/oder Phasenwinkel des Energieversorgungsnetzes, mit dem zweiten zulässigen Netzparameterbereich verglichen werden. Der mindestens eine Netzparameter kann beispielsweise mittels der zuvor beschriebenen Erfassungseinrichtung erfasst, insbesondere gemessen werden. In einfacher Weise kann überprüft werden, ob die zweite Trennbedingung erfüllt ist oder nicht.

Vorzugweise kann der zweite zulässige Netzparameterbereich einen Netzparameterbereich angeben, in dem sich ein Deaktivieren der elektrischen Anlage bzw. eine elektrische Trennung der elektrischen Anlage von dem Energieversorgungsnetz netzstabilisierend auf das Energieversorgungsnetz auswirkt. So kann für einen Verbraucher ein zulässiger zweiter Netzparameterbereich definiert werden, der indiziert, dass (in noch zulässiger Weise) weniger Leistung in das Netz eingespeist wird als ihm entzogen wird. In entsprechender Weise kann ein zulässiger zweiter Netzparameterbereich für einen elektrischen Erzeuger definiert werden.

Ein weiterer Aspekt der Erfindung ist eine elektrische Anlage, insbesondere ein elektrischer Verbraucher oder ein elektrischer Energieerzeuger, umfassend mindestens eine zuvor beschriebene Regelvorrichtung. Die Regelvorrichtung kann insbesondere in der elektrischen Anlage integriert sein. Beispielsweise kann ein Hardware- und/oder Softwaremodul, wie ein Softwareagent, in der elektrischen Anlage implementiert sein. Auch ist es vorstellbar, dass die Regelvorrichtung zwischen dem Energieversorgungsnetz, wie einer Energieleitung, und der elektrischen Anlage geschaltet ist. Beispielhafte und nicht abschließende elektrische Anlagen sind Windkraftanlagen, Photovoltaikanlagen, Wärmekopplungsanlagen, Waschmaschine, Kühlschränke, Hausautomationssteuervorrichtungen, Serveranlagen, Ladestationen für Elektrofahrzeuge, Elektrofahrzeuge, Klimaanlagen, Durchlauferhitzer, etc.

Gemäß einer bevorzugten Ausführungsform der erfindungsgemäßen elektrischen Anlage kann die elektrische Anlage eingerichtet sein, nur nach Erhalt eines Deaktivierungssignals von der Regelvorrichtung die elektrische Anlage zu deaktivieren. Mit anderen Worten kann vorgesehen sein, dass sich die elektrische Anlage nach einem Stromausfall ausschließlich dann abschaltet, wenn die elektrische Anlage, beispielsweise die Schalteinrichtung, die einen Controller zum Runterfahren der elektrischen Anlage umfassen kann, das zuvor beschriebene Deaktivierungssignal empfangen hat. Nach einem Empfang kann beispielsweise der Controller die elektrische Anlage in herkömmlicher Weise runterfahren.

Ein noch weiterer Aspekt der Erfindung ist ein Verfahren zum Regeln (bzw. Steuern) der elektrischen Trennung einer elektrischen Verbindung zwischen einer in einem Energieversorgungsnetz angeordneten elektrischen Anlage und einem Energieversorgungsnetz gemäß dem Patentanspruch 10. Das Verfahren umfasst:

- Detektieren von mindestens einer ersten Trennbedingung,
- Bestimmen einer ersten Trennverzögerungszeitspanne nach Detektion der ersten Trennbedingung,
- wobei die erste Trennverzögerungszeitspanne eine zufällige Zeitspanne ist, und
- Bewirken einer elektrischen Trennung der elektrischen Verbindung zwischen der elektrischen Anlage und dem Energieversorgungsnetz frühestens nach Ablauf der ersten Trennverzögerungszeitspanne.

Das Verfahren kann insbesondere zum Betreiben der zuvor beschriebenen Regelvorrichtung und/oder elektrischen Anlage verwendet werden.

Ein noch weiterer Aspekt der vorliegenden Erfindung ist ein System umfassend ein Energieversorgungsnetz und mindestens eine zuvor beschriebene elektrische Anlage. Vorzugsweise kann das System eine Vielzahl der zuvor beschriebenen elektrischen Anlagen umfassen.

Ein noch weiterer Aspekt der Erfindung ist ein Computerprogramm mit Instruktionen ausführbar auf einem Prozessor derart, dass eine elektrische Anlage gemäß dem zuvor beschriebenen Verfahren runtergefahren bzw. die elektrische Verbindung zwischen der elektrischen Anlage und dem Energieversorgungsnetz getrennt wird.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Regelvorrichtung, die erfindungsgemäße elektrische Anlage, das erfindungsgemäße Verfahren, das erfindungsgemäße System und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1 eine schematische Ansicht eines Ausführungsbeispiels eines Systems gemäß der vorliegenden Erfindung;

Fig. 2 eine schematische Ansicht eines Ausführungsbeispiels einer Regelvorrichtung gemäß der vorliegenden Erfindung;

Fig. 3 ein schematisches Diagramm eines Ausführungsbeispiels eines Verfahrens gemäß der vorliegenden Erfindung;

Fig. 4 ein beispielhaftes Zeitdiagramm mit einer Mehrzahl von Trennverzögerungszeitspannen; und

Fig. 5 ein Diagramm mit beispielhaften zweiten zulässigen Netzparameterbereichen.

In den Figuren werden für gleiche Elemente gleiche Bezugszeichen verwendet.

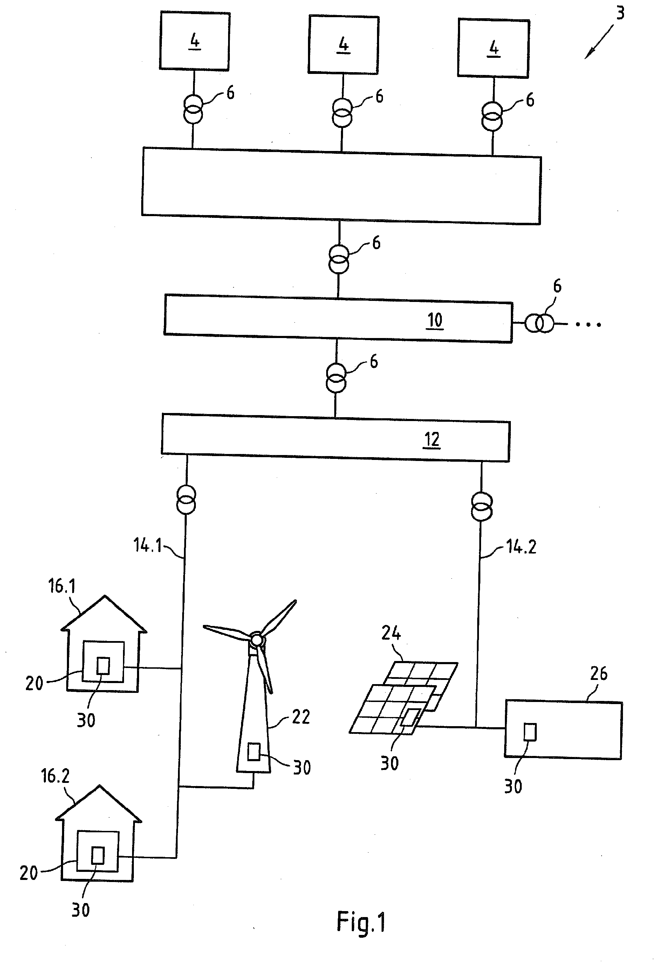

Figur 1 zeigt ein beispielhaftes System 2 mit einem Energieversorgungsnetz 8,10,12, 14,14.1,14.2 gemäß der vorliegenden Erfindung. Wie der Figur 1 zu entnehmen ist, umfasst das vorliegende System 2 herkömmliche, zentrale Kraftwerke 4, wie Kohlekraftwerke, Kernkraftwerke und Wasserkraftwerke. Die Kraftwerke 4 sind über geeignete Umrichter 6 an ein Höchstspannungsnetz 8 (meist 220 kV oder 380kV) angeschlossen.

Das Höchstspannungsnetz 8 ist ferner über einen geeigneten Umrichter 6 mit einem Hochspannungsnetz 10 (meist 110 kV) verbunden. An das Hochspannungsnetz 10 ist über einen weiteren Umrichter ein Mittelspannungsnetz 12 (1 kV- 50 kV) angeschlossen. Es versteht sich, dass weitere Mittelspannungsnetze 12 ebenso wie weitere (industrielle) Kraftwerke, industrielle Abnehmer, die Bahn, etc. an dem Hochspannungsnetz 10 angeschlossen sein können.

Darüber hinaus sind beispielhaft zwei Orts- bzw. Stadtnetze 14.1 und 14.2 über einen weiteren Umrichter 6 an das Mittelspannungsnetz 12 angeschlossenen. Bei den Orts- bzw. Stadtnetzen 14.1 und 14.2 handelt es sich insbesondere um Niederspannungsnetze 14.1 und 14.2 (400/230 V). Die verschiedenen Spannungsnetze bilden vorliegend das Energieversorgungsnetz.

Das erste beispielhafte Ortsnetz 14.1 umfasst eine Mehrzahl von Gebäuden 16.1, 16.2, die jeweils einen zentralen Stromeingang aufweisen. Innerhalb der Gebäude 16.1, 16.2 kann sich eine Vielzahl an (nicht dargestellten) elektrischen Verbrauchern, wie Kühlschränke, Waschmaschinen, etc. befinden. In dem ersten Gebäude ist beispielhaft als elektrische Anlage 18 eine zentrale Steuereinheit 18 eines Hausautomationssystems dargestellt, welches zur Steuerung zumindest der elektrischen Verbraucher und/oder Erzeuger in dem Gebäude 16.1 eingerichtet ist. Das zweite Gebäude 16.2 umfasst beispielhaft eine Kraftwärmekopplungseinheit 20. Die Kraftwärmekopplungseinheit 20 wird mit einem geeigneten Brennstoff, wie Erdgas, Erdöl, Biogas, Klärgas, Deponiegas, Pflanzenöl, Holz, Pellets, etc., betrieben, und ist eingerichtet, elektrische und thermische Energie zu erzeugen. Hierbei kann elektrische Energie auch ins Ortsnetz 14.1 gespeist werden.

Neben den beispielhaften Gebäuden 16.1, 16.2 ist an dem Niederspannungsnetz 14.1 vorliegend ein Energieerzeuger 22 in Form einer Windkraftanlage 22 angeschlossen. Es versteht sich, dass eine Mehrzahl an Windkraftanlagen in Form eines Windparks angeschlossen sein kann.

Ferner weist das zweite Niederspannungsnetz 14.2 ein Solarkraftwerk 24 auf, welches eingerichtet ist, elektrische Energie in das Niederspannungsnetz 14.2 einzuspeisen. Schließlich ist beispielhaft ein elektrischer Verbraucher in Form eines Kühlhauses 26 mit einem hohen elektrischen Bedarf dargestellt.

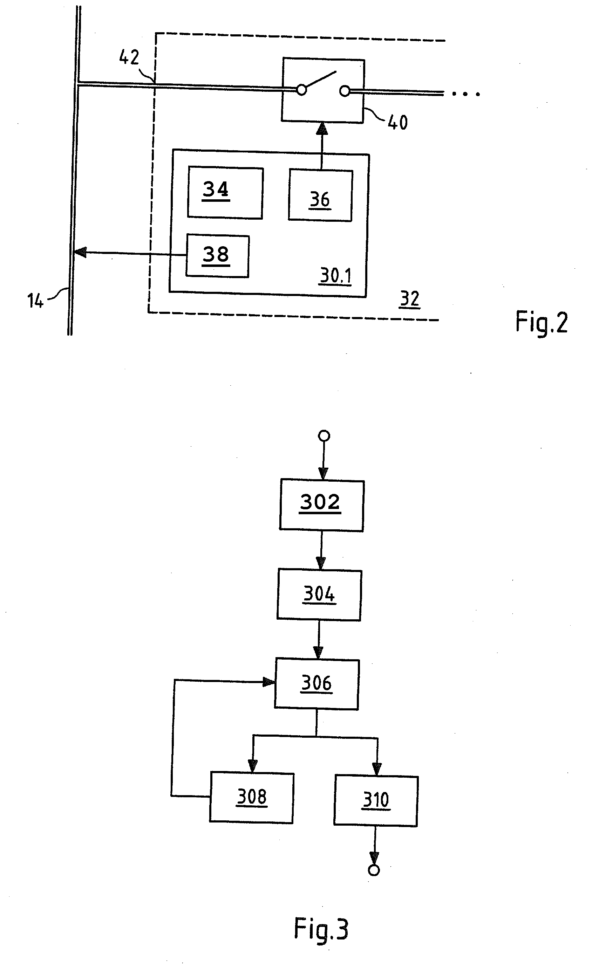

Vorzugsweise weist jedes der elektrischen Verbraucher und/oder Erzeuger 18 bis 26 eine Regelvorrichtung 30 (bzw. Steuervorrichtung 30) gemäß der vorliegenden Erfindung auf. Die Regelvorrichtung 30 ist insbesondere eingerichtet, ein dezentrales Runterfahren der verschiedenen Verbrauchern und/oder Erzeugern 18 bis 26 zu regeln (bzw. zu steuern). Die Regelvorrichtung wird nachfolgend mittels der Figur 2 und der Figur 3 näher beschrieben.

Die Figur 2 zeigt ein Ausführungsbeispiel der Regelvorrichtung 30.1 (bzw. Steuervorrichtung 30.1) gemäß der vorliegenden Erfindung. In dem dargestellten Ausführungsbeispiel ist die Regelvorrichtung 30.1 in einer elektrischen Anlage 32 integriert. Beispielsweise kann die Regelvorrichtung 30.1 ein Hardwaremodul mit einem Prozessor, Speichermittel, etc. sein. Auch kann die Regelvorrichtung 30.1 ein Softwaremodul, wie ein Softwareagent, sein. In diesem Fall kann vorteilhafterweise die Hardware, wie ein Controller, der elektrischen Anlage 32 zur Ausführung des Softwareagenten genutzt werden. Es versteht sich, dass die Regelvorrichtung 30.1 aus Hard- und Softwaremodulen gebildet sein kann.

Die elektrische Anlage 32 ist über einen Stromanschluss 42 und eine Schalteinrichtung 40 mit dem Energieversorgungsnetz 14 verbunden. Mit anderen Worten ist im vorliegenden Ausführungsbeispiel eine elektrische Verbindung zwischen dem Energieversorgungsnetz 14 und der elektrischen Anlage vorgesehen, welche über eine Schalteinrichtung 40 getrennt (und auch wiederhergestellt) werden kann.

Wie der Figur 2 zu entnehmen ist, weist die Regelvorrichtung 30.1 eine Detektionseinrichtung 34, eine Regeleinrichtung 36 (bzw. Steuereinrichtung) und eine Erfassungseinrichtung 38 auf. Die Erfassungseinrichtung 38 ist dazu eingerichtet, mindestens einen Netzparameter, wie die Netzspannung, die Netzfrequenz und/oder der Netzstrom, zu erfassen. Beispielsweise kann an einer Leitung des Energieversorgungsnetzes 14 mindestens ein entsprechender Messfühler angeordnet sein. Es versteht sich, dass der Netzparameter an einer beliebigen Stelle, beispielsweise an dem Stromanschluss 42 der elektrischen Anlage 32, gemessen werden kann.

Die Detektionseinrichtung 34 ist insbesondere eingerichtet, eine erste Trennbedingung zu detektieren (Schritt 302), also zu überprüfen, ob die erste Trennbedingung erfüllt ist. In einem einfachen Fall detektiert die Detektionseinrichtung 34 den Empfang eines Steuerungssignals zum Trennen der elektrischen Verbindung. Alternativ oder zusätzlich kann der Detektionseinrichtung 34 für den Detektionsprozess der mindestens eine erfasste Netzparameter von der Erfassungseinrichtung 38 zur Verfügung gestellt werden. Dieser kann dann von der Detektionseinrichtung 34 ausgewertet werden. Beispielsweise kann der erfasste Netzparameter mit einem vorgegebenen zulässigen ersten Netzparameterbereich verglichen werden. Die Detektionseinrichtung 34 überprüft für die Detektion der ersten Trennbedingung, ob die lokal und aktuell erfasste Netzfrequenz in dem Netzparameterbereich liegt oder nicht. In ähnlicher Weise kann alternativ oder zusätzlich zumindest die Netzspannung von der Detektionseinrichtung 34 ausgewertet werden.

Die Regeleinrichtung 36 ist dazu eingerichtet, nach der Detektion der ersten Trennbedingung, beispielsweise nachdem die Detektionseinrichtung 34 ein positives Vergleichsergebnis der Regeleinrichtung 36 mitgeteilt hat, eine erste zufällige Trennverzögerungszeitspanne zu bestimmen (Schritt 304). In einem ersten Teilschritt können zunächst ein minimaler und ein maximaler Zeitgrenzwert von der Regeleinrichtung bestimmt werden. Es versteht sich, dass diese auch bereits vorab, beispielsweise bei der Erstinstallation der Regelvorrichtung 30.1 festgelegt werden können. Vorteilhafterweise werden bei der Bestimmung der Zeitgrenzwerte verschiedene Parameter, wie die Systemklasse, die Art der Netzlast, die Höhe der Netzlast, die lokale Uhrzeit, etc., berücksichtigt. Dies kann insbesondere in Form einer vorgegebenen Bestimmungsregel abgebildet werden, in denen die aktuellen Parameterwerte, wie z.B. die tatsächliche Systemklasse der elektrischen Anlage 32 und die aktuelle lokale Uhrzeit, eingesetzt werden. So kann beispielsweise mindestens eine (Rechen-)Regel in der Regeleinrichtung 36 implementiert sein, die von der Regeleinrichtung 36 (unmittelbar) nach Detektion der Trennbedingung zur Bestimmung der Zeitgrenzwerte abgearbeitet wird. Nach der Bestimmung der Zeitgrenzwerte wird eine in dem bestimmten Grenzbereich liegende zufällige erste Trennverzögerungszeitspanne beispielsweise mit einem entsprechend konfigurierten Zufallsgenerator bestimmt. Es versteht sich, dass auch diese Bestimmung bereits bei der Erstinstallation durchgeführt worden sein kann.

Wie bereits beschrieben wurde, wird durch die Trennverzögerungszeitspanne das Abschalten der elektrischen Anlage 32 bzw. die elektrische Trennung der elektrischen Verbindung zwischen der elektrischen Anlage 32 und dem Energieversorgungsnetz 14 um eine zufällige Zeitdauer nach einer erstmaligen Detektion einer ersten Trennbedingung verzögert. Die elektrische Schalteinrichtung 40 kann insbesondere eingerichtet sein, die elektrische Anlage 32 nur dann zu deaktivieren, wenn die Schalteinrichtung 40 (beispielsweise ein Controller der Schalteinrichtung) von der Regeleinrichtung 36 entsprechend angesteuert wird.

Es versteht sich, dass gemäß anderen Varianten auch vorgesehen sein kann, dass nach Ablauf der ersten Trennverzögerungszeitspanne die Regeleinrichtung 36 automatisch ein Deaktivierungssignal sendet, derart, dass sich die elektrische Anlage 32 abschaltet. Dann entfallen die Schritte 306 und 308.

Nach Ablauf der ersten Trennverzögerungszeitspanne kann in einem optionalen zweiten Detektionsschritt 306 eine zweite Trennbedingung von der Detektionseinrichtung 34 überprüft werden. Insbesondere kann zunächst die Erfassungseinrichtung 38 mindestens einen lokalen und aktuellen Netzparameter der Detektionseinrichtung 34 zur Verfügung stellen. Die Detektionseinrichtung 34 kann in dem Schritt 306 den erfassten Netzparameter mit einem zweiten zulässigen Netzparameterbereich vergleichen.

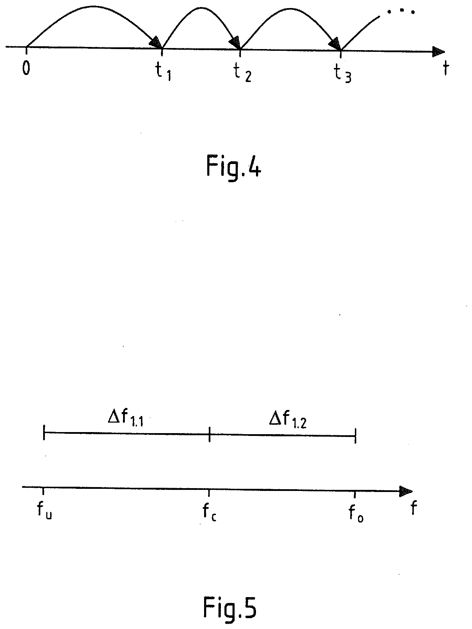

Zwei beispielhafte zweite zulässige Netzparameterbereiche $\Delta f_{1.1}$ und $\Delta f_{1.2}$ sind für den Netzparameter Netzfrequenz f in der Figur 5 dargestellt. Ein erster beispielhafter zweiter Netzparameterbereich $\Delta f_{1.1}$ wird durch die untere Frequenz $f_u$ (z.B. 49,8 Hz) und die obere Frequenz $f_c$ (z.B. 50 Hz) bestimmt, während ein zweiter beispielhafter zweiter Netzparameterbereich $\Delta f_{1.2}$ durch die untere Frequenz $f_c$ (z.B. 50 Hz) und die obere Frequenz $f_o$ (z.B. 50, 2 Hz) bestimmt wird. Die Frequenz $f_c$ stellt die optimale Netzfrequenz dar. Befindet sich die aktuelle Netzfrequenz in dem Netzparameterbereich $\Delta f_{1.1}$, also unterhalb der optimalen Netzfrequenz $f_c$, ist dies ein Indiz dafür, dass nicht genug Leistung in das Energieversorgungsnetz 14 eingespeist wird (bzw. zu viel Leistung dem Energieversorgungsnetz 14 entzogen wird). Daher ist erkannt worden, dass dieser Netzparameterbereich insbesondere für elektrische Verbraucher als zulässiger zweiter Netzparameterbereich definiert werden sollte, da sich ein Abschalten eines Energieerzeugers netzstabilisierend auswirkt. Hingegen verstärkt das Abschalten eines Energieerzeugers das Problem, dass nicht genug Leistung in das Energieversorgungsnetz 14 eingespeist wird (bzw. zu viel Leistung dem Energieversorgungsnetz 14 entzogen wird). Ein Energieerzeuger sollte daher nicht abgeschaltet werden. Umgekehrtes gilt für den zweiten dargestellten Netzparameterbereich. Bei diesem Netzparameterbereich wirkt das Abschalten von Energieerzeugern stabilisierend während die Trennung von Verbrauchern gegenteilig wirken, da eine Netzfrequenz in diesem Bereich ein Indiz für zu viel Leistung im Energieversorgungsnetz 14 ist.

Das Detektionsergebnis kann insbesondere der Regeleinrichtung 36 von der Detektionseinrichtung 34 zur Verfügung gestellt werden. Ist das Detektionsergebnis positiv, dann wird die Trennung der elektrischen Verbindung bewirkt. Vorliegend sendet die Regeleinrichtung 36 in Schritt 310 ein Deaktivierungssignal aus. Empfängt die elektrische Anlage 32 das Deaktivierungssignal, dann schaltet sie sich selbst aus. Beispielsweise kann nach Erhalt des Deaktivierungssignals ein Schalter der Schalteinrichtung 40 geöffnet werden. Vor dem Öffnen des Schalters kann z.B. ein Controller die elektrische Anlage 32 in herkömmlicher Weise runterfahren. In einer Ausführungsform, bei der es sich bei der elektrischen Anlage 32 um eine regelbare elektrische Anlage 32 handelt, kann die Regeleinrichtung 36 zusätzlich vorgegeben, in welchen Schritten die elektrische Anlage 32 deaktiviert werden soll. Beispielsweise kann die Netzlast, insbesondere die Höhe der Netzlast, der elektrische Anlage 32 schrittweise deaktiviert bzw. reduziert werden.
Ist das Detektionsergebnis negativ, schaltet sich die elektrische Anlage 32 nicht unmittelbar ab. In einem Schritt 308 kann die Regeleinrichtung 36 insbesondere eine weitere Trennverzögerungszeitspanne bestimmen. Nach Ablauf der weiteren Trennverzögerungszeitspanne kann das Verfahren mit Schritt 306 fortgesetzt werden. Es versteht sich auch hier, dass anstelle von Schritt 306 eine automatische Deaktivierung erfolgen kann.
Figur 4 zeigt einen beispielhaften Zeitverlauf, bei dem nach Ablauf der ersten Trennverzögerungszeitspanne zum Zeitpunkt $t_1$ und nach einem negativen Detektionsergebnis eine weitere Trennverzögerungszeitspanne bis zum Zeitpunkt $t_2$ bestimmt wird (usw.). Insbesondere können die Trennverzögerungszeitspannen nach jedem negativen Detektionsergebnis verlängert, vorzugsweise exponentiell verlängert werden.
Generell muss für alle Zeitpunkte die Summe der eingespeisten und verbrauchten Leistung im Wesentlichen Null ergeben. Es ist folglich dafür Sorge zu tragen, dass die Systemfrequenz f stabilisiert wird. Die zur Verfügung stehenden Regelenergiereserven dürfen also nicht überschritten werden, so dass die vertikale Netzlast (positive & negative Lasten/Erzeuger der Verteilnetze bzw. Energieerzeugungsnetze) nur sukzessiv und nur so schnell wieder zugeschaltet werden dürfen wie die Netzfrequenz es zulässt. Das System benötigt also Zeit zwischen einzelnen Zu-/Abschaltungen, die es den anderen Systembeteiligten möglich macht auf die Statusänderungen zu reagieren. Indem eine erfindungsgemäße Regelvorrichtung in einer Mehrzahl an dezentralen elektrischen Anlagen installiert wird, kann dem Gesamtsystem ausreichend Zeit gegeben werden, so dass ein Abschalten einer Mehrzahl von Anlagen möglich ist.

## Patentansprüche

**1.** Regelvorrichtung (30, 30.1) für eine in einem Energieversorgungsnetz (8, 10, 12, 14, 14.1, 14.2) angeordnete elektrische Anlage (18, 20, 22, 24, 26, 32) zum Regeln einer elektrischen Trennung einer elektrischen Verbindung zwischen der elektrischen Anlage (18, 20, 22, 24, 26, 32) und dem Energieversorgungsnetz (8, 10,12,14,14.1,14.2), umfassend mindestens eine Detektionseinrichtung (34) eingerichtet zum Detektieren von mindestens einer ersten Trennbedingung, wobei die Regelvorrichtung (30, 30.1) ferner umfasst:

- mindestens eine Regeleinrichtung (36) eingerichtet zum Bestimmen einer ersten Trennverzögerungszeitspanne nach Detektion der ersten Trennbedingung,
- wobei die erste Trennverzögerungszeitspanne eine zufällige Zeitspanne ist, und
- wobei die Regeleinrichtung (36) eingerichtet ist, eine elektrische Trennung der elektrischen Verbindung zwischen der elektrischen Anlage (18, 20, 22, 24, 26, 32) und dem Energieversorgungsnetz (8, 10, 12, 14, 14.1, 14.2) frühestens nach Ablauf der ersten Trennverzögerungszeitspanne zu bewirken, **dadurch gekennzeichnet, dass**
- die Detektionseinrichtung (34) zum Detektieren von mindestens einer zweiten Trennbedingung nach Ablauf der ersten Trennverzögerungszeitspanne eingerichtet ist,
- die Regeleinrichtung (36) zum Bewirken einer elektrischen Trennung nur bei einem positiven Detektionsergebnis eingerichtet ist,
- die Regeleinrichtung (36) zum Bestimmen von mindestens einer weiteren Trennverzögerungszeitspanne bei einem negativen Detektionsergebnis eingerichtet ist, und
- die Regeleinrichtung (36) zum Bewirken einer elektrischen Trennung frühestens nach Ablauf der weiteren Trennverzögerungszeitspanne eingerichtet ist.

2. Regelvorrichtung (30, 30.1) nach Anspruch 1, **dadurch gekennzeichnet, dass**

- mindestens eine Erfassungseinrichtung (38) eingerichtet zum Erfassen von mindestens einem elektrischen Netzparameter vorgesehen ist,
- wobei die Detektionseinrichtung (34) zum Vergleichen des erfassten Netzparameters mit einem ersten zulässigen Netzparameterbereich eingerichtet ist, und
- wobei die Detektionseinrichtung (34) zum Detektieren einer ersten Trennbedingung bei einem positiven Vergleichsergebnis eingerichtet ist.

3. Regelvorrichtung (30, 30.1) nach Anspruch 1 oder 2, **dadurch gekennzeichnet, dass**

- die zufällige Trennverzögerungszeitspanne zwischen einem minimalen Zeitgrenzwert und einem maximalen Zeitgrenzwert liegt, und
- die Regeleinrichtung (36) zum Bestimmen des minimalen Zeitgrenzwerts und des maximalen Zeitgrenzwerts in Abhängigkeit von mindestens einem Parameter ausgewählt aus der Gruppe umfassend:

  - Systemklasse der elektrischen Anlage (18, 20, 22, 24, 26, 32),
  - regelbare Netzlast oder nicht regelbare Netzlast der der elektrischen Anlage (18, 20, 22, 24, 26, 32),
  - Art der Netzlast der elektrischen Anlage (18, 20, 22, 24, 26, 32),
  - Höhe der Nennleistung der Netzlast der elektrischen Anlage (18, 20, 22, 24, 26, 32),
  - historische Daten der elektrischen Anlage (18, 20, 22, 24, 26, 32),
  - mindestens ein lokal erfasster Netzparameter,
  - lokale Uhrzeit der elektrischen Anlage (18, 20, 22, 24, 26, 32),
  - prognostizierte Dauer eines erwarteten Stromausfalls,
  - empfangener Steuerbefehl

eingerichtet ist.

4. Regelvorrichtung (30, 30.1) nach einem der vorherigen Ansprüche, **dadurch gekennzeichnet, dass**

- die weitere Trennverzögerungszeitspanne länger ist als die unmittelbar abgelaufene Trennverzögerungszeitspanne.

5. Regelvorrichtung (30, 30.1) nach einem der vorherigen Ansprüche, **dadurch gekennzeichnet, dass**

- die Detektionseinrichtung (34) zum Vergleichen von mindestens einem Netzparameter mit einem zulässigen Netzparameterbereich zumindest nach Ablauf der ersten Trennverzögerungszeitspanne eingerichtet ist, und
- die Detektionseinrichtung (34) zum Detektieren der zweiten Trennbedingung bei einem positiven Vergleichsergebnis eingerichtet ist.

6. Regelvorrichtung (30, 30.1) nach Anspruch 5, **dadurch gekennzeichnet, dass** der zulässige Netzparameterbereich einen Netzparameterbereich angibt, in dem sich eine elektrische Trennung der elektrischen Verbindung zwischen der elektrischen Anlage (18, 20, 22, 24, 26, 32) und dem Energieversorgungsnetz (8, 10, 12, 14, 14.1, 14.2) netzstabilisierend auf das Energieversorgungsnetz (8, 10, 12, 14, 14.1, 14.2) auswirkt.

7. Elektrische Anlage (18, 20, 22, 24, 26, 32), insbesondere ein elektrischer Verbraucher (18, 20, 26) oder ein elektrischer Energieerzeuger (22, 24), umfassend mindestens eine Regelvorrichtung (30, 30.1) gemäß dem vorherigen Ansprüchen.

8. Elektrische Anlage (18, 20, 22, 24, 26, 32) nach Anspruch 7, **dadurch gekennzeichnet, dass** die elektrische Anlage (18, 20, 22, 24, 26, 32) eingerichtet ist, nur nach Erhalt eines Trennsignals von der Regelvorrichtung die elektrische Anlage (18, 20, 22, 24, 26, 32) von dem Energieversorgungsnetz (8, 10, 12, 14, 14.1, 14.2) zu trennen.

9. Verfahren zum Regeln der elektrischen Trennung einer elektrischen Verbindung zwischen einer in einem Energieversorgungsnetz (8, 10, 12, 14, 14.1, 14.2) angeordneten elektrischen Anlage (18, 20, 22, 24, 26, 32) und dem Energieversorgungsnetz (8, 10, 12, 14, 14.1, 14.2), umfassend folgende Schritte:

- Detektieren von mindestens einer ersten Trennbedingung durch eine Detektionseinrichtung (34),
- Bestimmen einer ersten Trennverzögerungszeitspanne nach Detektion der ersten Trennbedingung,
- wobei die erste Trennverzögerungszeitspanne eine zufällige Zeitspanne ist, und
- Bewirken einer elektrischen Trennung der elektrischen Verbindung zwischen der elektrischen Anlage (18, 20, 22, 24, 26, 32) und dem Energieversorgungsnetz (8, 10, 12, 14, 14.1, 14.2) frühestens nach Ablauf der ersten Trennverzögerungszeitspanne,
- Detektieren mindestens einer zweiten Trennbedingung nach Ablauf der ersten Trennverzögerungszeitspanne durch die Detektionseinrichtung (34),
- Bewirkung einer elektrischen Trennung nur bei einem positiven Detektionsergebnis durch die Regeleinrichtung (36),
- Bestimmung mindestens einer weiteren Trennverzögerungszeitspanne bei einem negativen Detektionsergebnis durch die Regeleinrichtung (36), und
- Bewirken einer elektrischen Trennung frühestens nach Ablauf der weiteren Trennverzögerungszeitspanne durch die Regeleinrichtung (36).

**10.** System (2), umfassend:

- ein Energieversorgungsnetz (8, 10, 12, 14, 14.1, 14.2), und
- mindestens eine elektrische Anlage (18, 20, 22, 24, 26, 32) nach Anspruch 7.

**11.** Computerprogrammprodukt, welches auf einem von einem Computer verwendbaren Medium gespeichert ist und computerlesbare Programmmittel beinhaltet, um den Computer zu veranlassen, dass eine elektrische Anlage (18, 20, 22, 24, 26, 32) gemäß den Schritten des Verfahrens nach Anspruch 9 runtergefahren und die elektrische Verbindung zwischen der elektrischen Anlage (18, 20, 22, 24, 26, 32) und dem Energieversorgungsnetz (8, 10,12,14, 14.1, 14.2) getrennt wird.

## Claims

**1.** Control device (30, 30.1) for an electrical system (18, 20, 22, 24, 26, 32) arranged in a power supply network (8, 10, 12, 14, 14.1, 14.2) for controlling an electrical separation of an electrical connection between the electrical device (18, 20, 22, 24, 26, 32) and the power supply network (8, 10, 12, 14, 14.1, 14.2), comprising at least one detection unit (34) configured to detect at least one first separation condition, wherein the control device (30, 30.1) further comprises:

- at least one control unit (36) configured to determine a first separation delay time period after detection of the first separation condition,
- wherein the first separation delay time period is a random time period, and
- wherein the control device (36) is configured to cause an electrical separation of the electrical connection between the electrical device (18, 20, 22, 24, 26, 32) and the power supply network (8,10,12,14, 14.1, 14.2) at the earliest after the expiration of the first separation delay time period, **characterized in that**
- the detection unit (34) is configured to detect at least one second separation condition after the first separation delay time period has elapsed,
- the control unit (36) is configured to cause an electrical separation only in the case of a positive detection result,
- the control unit (36) is configured to determine at least one further separation delay time period in the case of a negative detection result, and
- the control device (36) is configured to cause an electrical separation at the earliest after the expiration of the further separation delay time period.

**2.** Control device (30, 30.1) according to claim 1, **characterized in that**

- at least one measuring unit (38) configured to measure at least one electrical network parameter is provided,
- wherein the detection unit (34) is configured to compare the measured network parameter with a first admissible network parameter range, and
- wherein the detection unit (34) is configured to detect a first separation condition in case of a positive comparison result.

**3.** Control device (30, 30.1) according to claim 1 or 2, **characterized in that**

- the random separation delay period is between a minimum time limit and a maximum time limit, and
- the control unit (36) is configured for determining the minimum time limit and the maximum time limit depending on at least one parameter selected from the group, comprising:

  - system class of the electrical device (18, 20, 22, 24, 26, 32),
  - adjustable network load or non-controllable network load of the electrical device (18, 20, 22, 24, 26, 32),
  - type of network load of the electrical device (18, 20, 22, 24, 26, 32),
  - the level of the rated power of the network load of the electrical device (18, 20, 22, 24, 26, 32),
  - historical data of the electrical device (18, 20, 22, 24, 26, 32),
  - at least one locally measured network parameter,
  - local time of the electrical device (18, 20, 22, 24, 26, 32),
  - predicted duration of an expected power failure,
  - received control command.

**4.** Control device (30, 30.1) according to one of the preceding claims, **characterized in that**

- the further separation delay time period is longer than the immediately expired separation delay time period.

**5.** Control device (30, 30.1) according to one of the preceding claims, **characterized in that**

- the detection unit (34) is configured to compare at least one network parameter with an admissible network parameter range at least after the first separation delay time period has elapsed, and
- the detection unit (34) is configured to detect the second separation condition in case of a positive comparison result.

**6.** Control device (30, 30.1) according to claim 5, **characterized in that** the admissible network parameter range indicates a network parameter range in which an electrical separation of the electrical connection between the electrical device (18, 20, 22, 24, 26, 32) and the power supply network (8, 10, 12, 14, 14.1, 14.2) network causes an stabilizing effect on the power supply network (8, 10, 12, 14, 14.1, 14.2).

**7.** Electrical device (18, 20, 22, 24, 26, 32), in particular an electrical load (18, 20, 26) or an electrical energy generator (22, 24) comprising at least one control device (30, 30.1) according to the previous claims.

**8.** Electrical device (18, 20, 22, 24, 26, 32) according to claim 7, **characterized in that** the electrical device (18, 20, 22, 24, 26, 32) is configured to only separate the electrical device (18, 20, 22, 24, 26, 32) from the power supply network (8,10, 12, 14, 14.1, 14.2) upon receipt of a separation signal from the control device.

**9.** A method for controlling the electrical separation of an electrical connection between an electrical device (18, 20, 22, 24, 26, 32) arranged in a power supply network (8, 10, 12, 14, 14.1,14.2) and the power supply network (8, 10, 12, 14, 14.1, 14.2) comprising the following steps:

- detecting, by a detection unit (34), at least one first separation condition,
- determining a first separation delay time period after detection of the first separation condition,
- wherein the first separation delay time period is a random time period, and
- causing an electrical separation of the electrical connection between the electrical device (18, 20, 22, 24, 26, 32) and the power supply network (8, 10, 12, 14, 14.1, 14.2) at the earliest after expiration of the first separation delay period,
- detecting, by the detection unit (34), at least one second separation condition after expiration of the first separation delay time period,
- causing, by the control unit (36), of an electrical separation only in the case of a positive detection result,
- determining, by the control unit (36), of at least one further separation delay time period in the case of a negative detection result, and
- causing, by the control unit (36), an electrical separation at the earliest after the expiration of the further separation delay time period.

**10.** System (2) comprising:

- a power supply network (8, 10, 12, 14, 14.1, 14.2), and

- at least one electrical device (18, 20, 22, 24, 26, 32) according to claim 7.

**11.** A computer program product, stored on a computer usable medium and comprising computer readable means in order to cause the computer that an electrical device (18, 20, 22, 24, 26, 32) is shut down and the electrical connection between the electrical system (18, 20, 22, 24, 26, 32) and the power supply network (8, 10, 12, 14, 14.1, 14.2) is separated according to the steps of the method of claim 9.

## Revendications

**1.** Dispositif de réglage (30, 30.1) pour une installation électrique (18, 20, 22, 24, 26, 32) disposée dans un réseau d'alimentation en énergie (8, 10, 12, 14, 14.1, 14.2), ledit dispositif servant au réglage d'une séparation électrique d'une connexion électrique établie entre l'installation électrique (18, 20, 22, 24, 26, 32) et le réseau d'alimentation en énergie (8, 10, 12, 14, 14.1, 14.2), ledit dispositif de réglage comprenant au moins un dispositif de détection (34) installé pour la détection d'au moins une première condition de séparation, où le dispositif de réglage (30, 30.1) comprend en outre :

- au moins un dispositif de réglage (36) installé pour la détermination d'un premier laps de temps de retard de séparation après détection de la première condition de séparation,
- où le premier laps de temps de retard de séparation est un laps de temps aléatoire, et
- où le dispositif de réglage (36) est installé pour provoquer une séparation électrique de la connexion électrique établie entre l'installation électrique (18, 20, 22, 24, 26, 32) et le réseau d'alimentation en énergie (8, 10, 12, 14, 14.1, 14.2), ladite séparation se produisant au plus tôt après expiration du premier laps de temps de retard de séparation,

**caractérisé**

- **en ce que** le dispositif de détection (34) est installé pour la détection d'au moins une deuxième condition de séparation après expiration du premier laps de temps de retard de séparation,
- **en ce que** le dispositif de réglage (36) est installé pour provoquer une séparation électrique seulement dans le cas d'un résultat de détection positif,
- **en ce que** le dispositif de réglage (36) est installé pour la détermination d'au moins un autre laps de temps de retard de séparation dans le cas d'un résultat de détection négatif, et
- **en ce que** le dispositif de réglage (36) est installé pour provoquer une séparation électrique se produisant au plus tôt après expiration de l'autre laps de temps de retard de séparation.

**2.** Dispositif de réglage (30, 30.1) selon la revendication 1, **caractérisé**

- **en ce qu'**il est prévu au moins un dispositif de détection (38) installé pour la détection d'au moins un paramètre de réseau électrique,
- où le dispositif de détection (34) est installé pour comparer le paramètre de réseau détecté, à une première plage de paramètres de réseau admissible, et
- où le dispositif de détection (34) est installé pour la détection d'une première condition de séparation dans le cas d'un résultat de comparaison positif.

**3.** Dispositif de réglage (30, 30.1) selon la revendication 1 ou 2, **caractérisé**

- **en ce que** le laps de temps de retard de séparation aléatoire se situe entre une valeur limite de temps minimale et une valeur limite de temps maximale, et
- **en ce que** le dispositif de réglage (36) est installé pour la détermination de la valeur limite de temps minimale et de la valeur limite de temps maximale, en fonction d'au moins un paramètre sélectionné parmi le groupe se composant :

  - de la catégorie de système de l'installation électrique (18, 20, 22, 24, 26, 32),
  - d'une charge de réseau réglable ou d'une charge de réseau non réglable de l'installation électrique (18, 20, 22, 24, 26, 32),
  - du type de la charge de réseau de l'installation électrique (18, 20, 22, 24, 26, 32),
  - de l'importance de la puissance nominale de la charge de réseau de l'installation électrique (18, 20, 22, 24, 26, 32),
- de données historiques de l'installation électrique (18, 20, 22, 24, 26, 32),
- d'au moins un paramètre de réseau détecté localement,
- de l'heure locale de l'installation électrique (18, 20, 22, 24, 26, 32),
- de la durée prévue d'une panne de courant attendue,
- d'une instruction de commande reçue.

**4.** Dispositif de réglage (30, 30.1) selon l'une quelconque des revendications précédentes, **caractérisé**

- **en ce que** l'autre laps de temps de retard de séparation est plus long que le laps de temps de retard de séparation venant immédiatement de s'écouler.

**5.** Dispositif de réglage (30, 30.1) selon l'une quelconque des revendications précédentes, **caractérisé**

- **en ce que** le dispositif de détection (34) est installé pour comparer au moins un paramètre de réseau, à une plage de paramètres de réseau admissible, ladite comparaison se produisant au moins après expiration du premier laps de temps de retard de séparation, et
- **en ce que** le dispositif de détection (34) est installé pour la détection de la deuxième condition de séparation dans le cas d'un résultat de comparaison positif.

**6.** Dispositif de réglage (30, 30.1) selon la revendication 5, **caractérisé en ce que** la plage de paramètres de réseau admissible indique une plage de paramètres de réseau dans laquelle une séparation électrique de la connexion électrique établie entre l'installation électrique (18, 20, 22, 24, 26, 32) et le réseau d'alimentation en énergie (8, 10, 12, 14, 14.1, 14.2) agit sur le réseau d'alimentation en énergie (8, 10, 12, 14, 14.1, 14.2) en ayant un effet stabilisant sur le réseau.

**7.** Installation électrique (18, 20, 22, 24, 26, 32), en particulier un consommateur électrique (18, 20, 26) ou bien un producteur d'énergie électrique (22, 24), comprenant au moins un dispositif de réglage (30, 30.1) selon l'une quelconque des revendications précédentes.

**8.** Installation électrique (18, 20, 22, 24, 26, 32) selon la revendication 7, **caractérisé en ce que** l'installation électrique (18, 20, 22, 24, 26, 32) est installée seulement après réception d'un signal de séparation provenant du dispositif de réglage, ledit signal permettant que l'installation électrique (18, 20, 22, 24, 26, 32) soit séparée du réseau d'alimentation en énergie (8, 10, 12, 14, 14.1, 14.2).

**9.** Procédé de réglage de la séparation électrique d'une connexion électrique établie entre une installation électrique (18, 20, 22, 24, 26, 32) disposée dans un réseau d'alimentation en énergie (8, 10, 12, 14, 14.1, 14.2), et le réseau d'alimentation en énergie (8, 10, 12, 14, 14.1, 14.2), ledit procédé comprenant les étapes suivantes consistant :

- à détecter, par un dispositif de détection (34), au moins une première condition de séparation,
- à déterminer un premier laps de temps de retard de séparation après détection de la première condition de séparation,
- où le premier laps de temps de retard de séparation est un laps de temps aléatoire, et procédé consistant :

  - à provoquer une séparation électrique de la connexion électrique établie entre l'installation électrique (18, 20, 22, 24, 26, 32) et le réseau d'alimentation en énergie (8, 10, 12, 14, 14.1, 14.2), ladite séparation se produisant au plus tôt après expiration du premier laps de temps de retard de séparation,
  - à détecter, par le dispositif de détection (34), au moins une deuxième condition de séparation après expiration du premier laps de temps de retard de séparation,
  - à provoquer une séparation électrique par le dispositif de réglage (36), seulement dans le cas d'un résultat de détection positif,
  - à déterminer au moins un autre laps de temps de retard de séparation, par le dispositif de réglage (36), dans le cas d'un résultat de détection négatif, et
  - à provoquer une séparation électrique par le dispositif de réglage (36), au plus tôt après expiration de l'autre laps de temps de retard de séparation.

**10.** Système (2) comprenant :

- un réseau d'alimentation en énergie (8, 10, 12, 14, 14.1, 14.2), et
- au moins une installation électrique (18, 20, 22, 24, 26, 32) selon la revendication 7.

**11.** Produit de programme informatique qui est stocké en mémoire sur un support utilisable par un ordinateur et qui contient des moyens de programme pouvant être lus par l'ordinateur, pour amener l'ordinateur à faire en sorte qu'une installation électrique (18, 20, 22, 24, 26, 32) soit arrêtée conformément aux étapes du procédé selon la revendication 9 et que la connexion électrique établie entre l'installation électrique (18, 20, 22, 24, 26, 32) et le réseau d'alimentation en énergie (8, 10, 12, 14, 14.1, 14.2) soit séparée.

3
4
4
4
6
6
6
6
10
6
6
12
14.1
14.2
16.1
20
30
22
30
24
30
26
30
16.2
20
30

Fig.1

42
40
34
36
38
30.1
14
32

Fig.2

302
304
306
308
310

Fig.3

0
t1
t2
t3
t
...

Fig.4

Δf1.1
Δf1.2
fu
fc
fo
f

Fig.5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2013152788 A1
- DE 102009050042 A1